# EUROPEAN PATENT APPLICATION

(11) **EP 2 426 930 A1**
(43) Date of publication of application: **07.03.2012**
(21) Application number: 10175495.0
(22) Date of filing: 06.09.2010
(51) Int. Cl.: H04N 13/00

(54) **System and method of analyzing a stereo video signal**

(71) Applicant: CSEM Centre Suisse d'Electronique et de Microtechnique SA - Recherche et Développement, 2002 Neuchâtel (CH)
(72) Inventor: Hasler, David, 2000, Neuchâtel (CH); Masa, Peter, 1425, Onnens (CH); Arreguit, Xavier, 1052, Le Mont-sur-Lausanne (CH); Franzi, Edoardo, 1400, Yverdon-les-Bains (CH)
(74) Representative: GLN

(57) **Abstract**

A method of analyzing a stereo video signal, characterized in that it comprises the steps of extracting from the stereo video signal at least one video frame (10) having two closed regions (10L, 10R), selecting a set of locations (11L, 11R) on each of the two closed regions of the video frame, computing a description (D.11L, D.11R) of the video frame in the neighbourhood (12L, 12R) of each location, associating at least one location (11 L) on the left region (10L) with one location (11 R) on the right region (10R) according to the matching of their respective descriptions, computing the depth (Z.11 L) of at least one location (11 L) on one (11 L) of the regions based on its position (X11L, Y11 L) and the position (X11R, Y11 R) of its associated location (11 R), and transmitting said locations (X11L, Y11 L), depths (Z.11 L) and descriptions (D.11L) though a communication channel (13) to an application electronic device (14).

## Description

### Technical Field

The present invention relates to the field of three dimensional image acquisition and analysis. More specifically, the present invention relates to a method of analyzing a three dimensional view.

Even though non exclusively, such a method of analyzing may be applied in order to simulate a three dimensional view that is useful for instance for the surveillance of a specific geographical zone or for three dimensional cinema.

### State of the art

It is well-known from US 5,835,133 to provide video or images in three dimensions by means of camera systems that capture "stereo video" images of an environment or model. One image is recorded for the left eye and a second image is recorded for the right eye. Such systems include an image sensor, an optical assembly having two optical channels arranged in such a manner that substantially coincident portions of respective fields of view of the two optical channels are focused onto abutting regions of the image sensor, such system further including a video generation circuit that is arranged so as to sample the abutting regions of said image sensor to generate a stereo video signal.

Thus, the method of US 5,835,133 comprises the steps of:
- selecting a portion of a field of view of the first optical channel;
- selecting a portion of a field of view of the second optical channel, the portion of the field of view of the second optical channel being substantially coincident with the portion of the field of view of the first optical channel;

- projecting the portions of the fields of view of the first and second optical channels onto respective abutting regions of an image sensor; and
- sampling the abutting regions of the image sensor to generate a stereo video signal.

This method allows to render three dimensional information, which leads to improve the realism of computer simulations. Moreover, this method is advantageous since the data can be readily played back for three dimensional viewing and interaction and can also be used to compute 3D information about objects in scenes.

Moreover, this method uses a single-sensor system, which avoids the costly electronics required by a double-sensor system to provide an image to each human eye of a viewer.

For the purpose of analyzing the field of view that is captured with a stereo video camera system and more specifically to locate an object in a video frame, it is known from US 6,711,293 to extract scale invariant features from the video frame in order to compute a disparity map. To this end, a processor circuit is used to:
- produce difference images from an initial reference image provided by a camera;
- locate pixel amplitude extrema in each difference image;
- define a pixel region about each pixel amplitude extrema in each difference image;
- divide each pixel region into subregions; and
- produce a plurality of component subregions descriptors for each subregion of each pixel region.

Nevertheless, a disadvantage of such a method, for computing the disparity map of a video frame, is that it implies a lot of calculations in order to compute said disparity map. In addition, a complete disparity map suffers from occlusions, in other words, there are some pixels of the image that have undefined values and create a complexity burden in their processing.

Indeed, assuming for instance an image pair of 160 x 240 pixels, with regions of 16 x 16 pixels and a disparity extrema of 10 pixels, the method of US 6,711,293 implies 160 * 240 * 16 * 16 * 10 operations, which corresponds approximately to 100.000.000 operations. In addition, in terms of data communication, for the above-mentioned example, it needs 10 bits per pixel in intensity and 4 bits for disparity, that is to say about 525 kbits. Due to this important amount of information, expensive electronic devices are needed.

The object of the present invention is to provide a method of analyzing a three dimensional view, which needs less calculation and implies less information, in order to make it possible to adapt it to a lot of electronic devices.

### Disclosure of the invention

The above object is achieved by a method of analyzing a three dimensional view from a stereo video signal that samples two closed regions of an image sensor, onto which two substantially coincident portions of the fields of view on respectively two optical assemblies are projected. According to the invention, this method is characterized in that it further comprises the steps of:
- extracting from the stereo video signal at least one video frame having two closed regions corresponding to the closed regions of the image sensor;
- selecting a set of locations on each of the two closed regions of the video frame;
- computing a description of the video frame in the neighbourhood of each location;
- associating at least one location on the left region with one location on the right region according to the matching of their respective descriptions;
- computing the depth of at least one location on one of the regions, based on its position and the position of its associated location; and
- transmitting said locations, depths and descriptions though a communication channel to an application electronic device.

The depth of a given location, which corresponds to the distance between the two optical assemblies and the object located at the location, is a meaningful information for the purpose of analyzing a three dimensional view.

Thanks to the invention and more particularly to the selection of only a set of locations corresponding to salient points in the image, it is possible to avoid the generation of a disparity map and thus to reduce the amount of calculations that are needed in order to provide relevant information about the field of view.

Indeed, still assuming the image pair of 160 x 240 pixels, the invention makes it possible to reduce the amount of features (or locations) that are detected in every subregion of the image, and that may be about 100. This detection needs 2 operations per pixel, then the location of the descriptions needs about 10 operations per feature. Assuming for instance only 64 components per description are outputted, these components are extracted from an integral image, which needs 8 * 64 operations per feature. As a consequence, the method according to the present invention needs 160 * 240 * (2+2) + 100 * (2 * 8 * 64 + 10 * 64) = 370.000 operations, compared to the 100.000.000 operations in prior art. In other words, the present invention allows to reduce the amount of calculations 265 times. In terms of data communication, the present invention needs 16 bits per components, thus 100 * 64 * 16 bits, and 2 bits per feature to encode the position, i.e. 101 kbits, compared to the 525 kbits in prior art.

For the purpose of reducing the amount of data transmitted through the communication channel, locations, depths and descriptions are filtered according to a predetermined method, before said transmission.

For the purpose of reducing the overall computational cost, the video frame may be obtaining by subtracting two successive video frames.

In a preferred embodiment of the invention, the set of locations corresponds to a set of predetermined salient points.

In a particular embodiment of the invention, the set of locations is selected by means of a Harris Corner Detector algorithm.

In a particular embodiment of the invention, the method further comprises a step of classifying the descriptions of the video frame.

Advantageously, the fields of view of the respectively two optical assemblies substantially share the same vertical position, which allows to have the same vertical position of a given object in both closed regions and to make the association only depend on the horizontal coordinates.

For the purpose of facilitating the association of locations on the left and right regions, said association is performed by comparing a matching score, that is representative of the matching between the descriptions of the video frame in the neighbourhood of said locations, with a given threshold.

In this case, the matching score may correspond to an estimation of the distance between the descriptions of the video frame in the neighbourhood of said locations.

The invention further concerns a method of acquiring and analyzing a three dimensional view, comprising the steps of:
- selecting two substantially coincident portions of the fields of view of two optical assemblies;
- projecting the portions onto respective closed regions of an image sensor;
- sampling the closed regions of the image sensor to generate a stereo video signal.

According to the invention, this method of acquiring and analyzing further comprises the steps of analyzing said stereo video signal according to the method of any of the previous above-described embodiments.

The invention further concerns a video system for acquiring and analyzing a three dimensional view, said video system comprising:
- an image sensor responsive to an image projected thereon;
- an optical assembly having first and second optical channels arranged in such a manner that substantially coincident portions on respective fields of view of the first and second optical channels are focused onto closed regions of said image sensor;
- a video generation circuit coupled to sample the closed regions of said image sensor to generate a stereo video signal.

According to the invention, the video system further comprises a processor arranged in such a manner that it computes the method of analyzing a stereo video signal according to any one of preceding embodiments.

More precisely, this processor is arranged in such a manner that it computes the steps of:
- extracting from the stereo video signal at least one video frame having two closed regions corresponding to the closed regions of the image sensor;
- selecting a set of locations on each of the two closed regions of the video frame;
- computing a description of the video frame in the neighbourhood of each location;
- associating at least one location on the left region with one location on the right region according to the matching of their respective descriptions;
- computing the depth of at least one location on one of the regions based on its position and the position of its associated location; and
- transmitting said location, depth and description though a communication channel to an application electronic device.

### Brief description of the drawings

The figures attached to this specification are intended to further illustrate the invention, wherein:
- FIG. 1 is a schematic drawing of a video system according to the present invention;
- FIG. 2 is a schematic drawing of a video frame extracted from a stereo video signal according to the invention;
- FIG. 3 is a schematic drawing of a video frame on which a set of locations is selected according to the invention;
- FIG. 4 is a synoptic drawing of a method of acquiring and analyzing a stereo video signal according to the invention;
- FIG. 5 is a synoptic drawing of the step of computing a description of the video frame in the neighbourhood of each location, according to the invention;

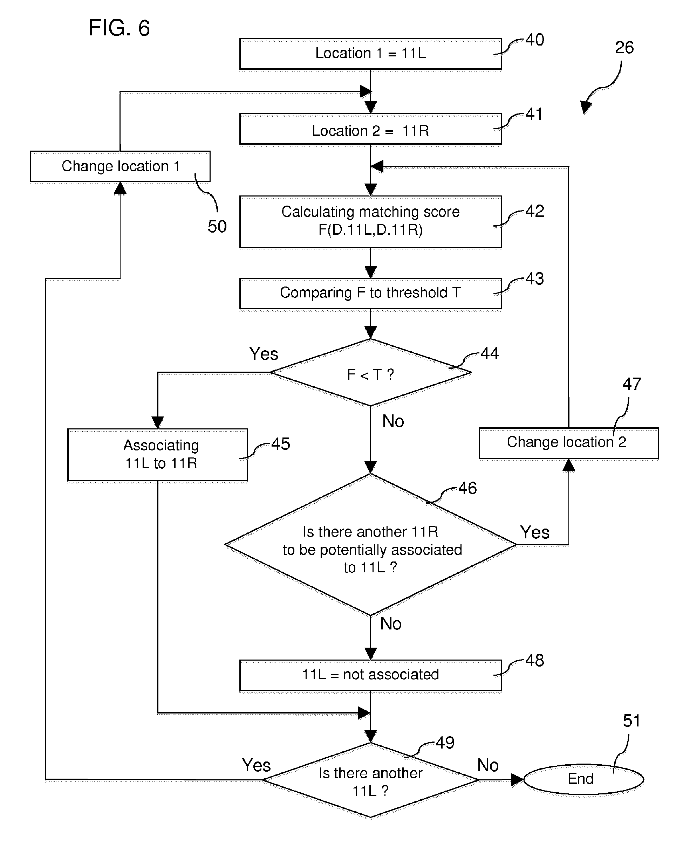

- FIG. 6 is a synoptic drawing of the step of associating locations on the left and right regions according to the matching of their respective descriptions, according to the invention; and

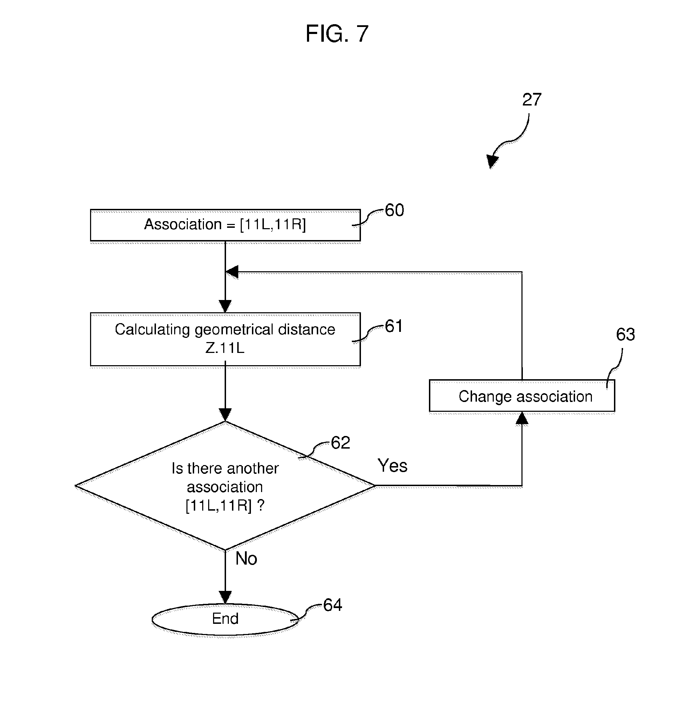

- FIG. 7 is a synoptic drawing of the step of computing the depth each location on one of the two closed regions, according to the invention.

### Detailed description

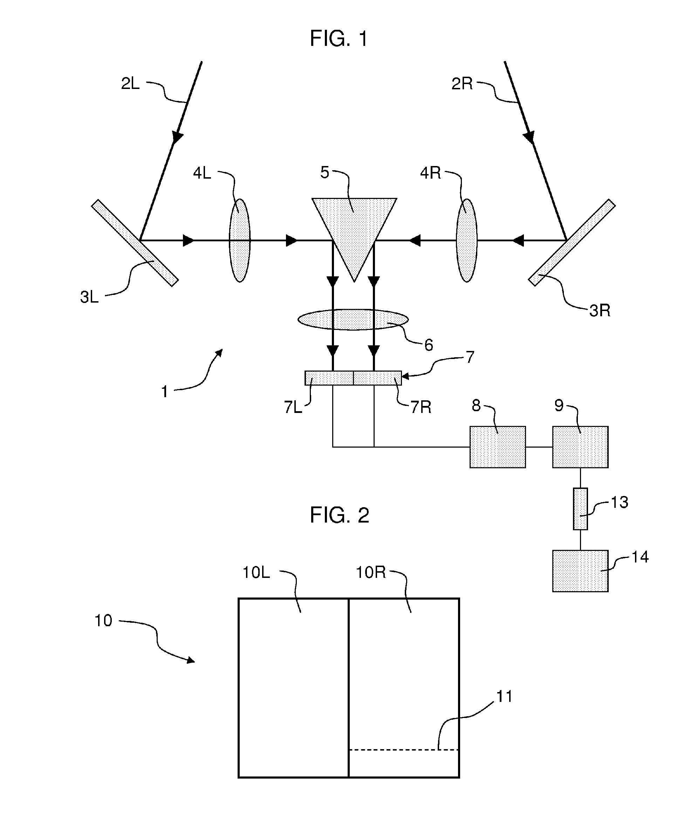

A stereo video system 1, representative of the invention and schematically showed on FIG. 1, is used to acquire and analyze a three dimensional filed of view. To this end, this stereo video system comprises an optical system which consists in a left and a right channels in the form of two optical assemblies 3L, 4L and 3R, 4R. These optical assemblies direct two optical paths 2L and 2R, from a unique field of view, onto an image sensor 7, via a reflecting element 5 and a lens 6. More precisely, each of the two optical assemblies comprises a reflector 3L/3R that receives light path 2L/2R and reflect it in the direction of a conventional rectilinear imaging lens 4L/4R.

Light path 2L corresponds to the center of the field of view of the left channel 3L, 4L and, similarly, light path 2R corresponds to the center of the field of view of the right channel 3R, 4R. Each of the imaging lenses 4L and 4R is adjustable left and right along its optical axis in order to make the optical axis of the two optical assemblies be collinear and the portion of the field of view of said optical assemblies be coincident. Thus, left and right images received via respective light paths 2L and 2R constitute a stereo image pair.

Light paths 2L and 2R are then directed to the reflecting structure 5, which is composed of two reflecting structures surfaces disposed at 90 degrees to one another and at 45 degrees to the optical axis of lenses 4L and 4R. The purpose of this reflecting structure 5 is to fold the light paths 2L and 2R and to direct them so as to be coplanar on the plane of the image sensor 7. The projecting lens 6 allows to focus and to project these two lights paths 2L and 2R respectively onto two abutting regions 7L and 7R of the image sensor 7. Herein, abut means that the two regions are so closed that the demarcation between the images is sharp, preferably with no overlap or gap or a negligible overlap or gap. Thus a stereo image pair is formed on the image sensor 7, without any loss of the useful amount of the image area.

It will be observed that the above-mentioned optical system may be designed in order to be adapted to operate with electronics found in a standard video camera. Herein, standard video camera electronics refers to circuitry found within a camera system having a single charge coupled device circuit (CCD) which is sampled via well known video sampling circuitry to generate video signals in standard well known formats. The output signal can be either digital or analogical. Nevertheless, the CCD may be replaced with any type of well known and conventional image sensor and may include infrared sensors or other photosensitive devices.

It will be furthermore observed that the optical elements 3L, 3R, 4L, 4R, 5 and 6 of the optical system may be produced using injected plastic, for the purpose of reducing its cost.

The electric signal that is received by the optical sensor 7 is then transmitted to a video generation circuit 8, which is coupled to said sensor 7 in order to sample the closed regions 7L and 7R of said sensor and to generate an input stereo video signal that is representative of what is projected onto said closed regions 7L and 7R, as a function of the luminance hitting sensor 7. This function may be a linear function, or any other function, preferably a logarithmic function.

The stereo video signal is then transmitted to a processor 9 that is arranged in such a manner that it extracts a plurality of video frames from said stereo video signal and provides an analysis of said video frame. Data obtained with said analysis may then be transmitted to an application electronic device 14 through a communication channel 13. This application electronic device 14 is made in such a manner that it can exploit said data according to the chosen application.

Each video frame 10 of the stereo video signal is represented in details on FIG.2. The frame 10 comprises two abutting regions 10L and 10R, which correspond to what is projected onto the two abutting regions 7L and 7R of the image sensor 7. Each of the two regions 10L and 10R presents a plurality of epipolar lines 11.

For the purpose of simplifying the subsequent processing, the optics can advantageously be placed in such a way that an object at a given coordinate in the left image appear on the same line in the right image, and vice-versa, i.e. an object substantially shares the same vertical coordinate in the left image and in the right image. In other words, the epipolar lines of the two regions 10L and 10R should be parallel. This feature is achieved when the optical axis of the two above-mentioned optical assemblies are parallel and when the pixel lines of the image sensor 7 are parallel to the line joining said two optical assemblies.

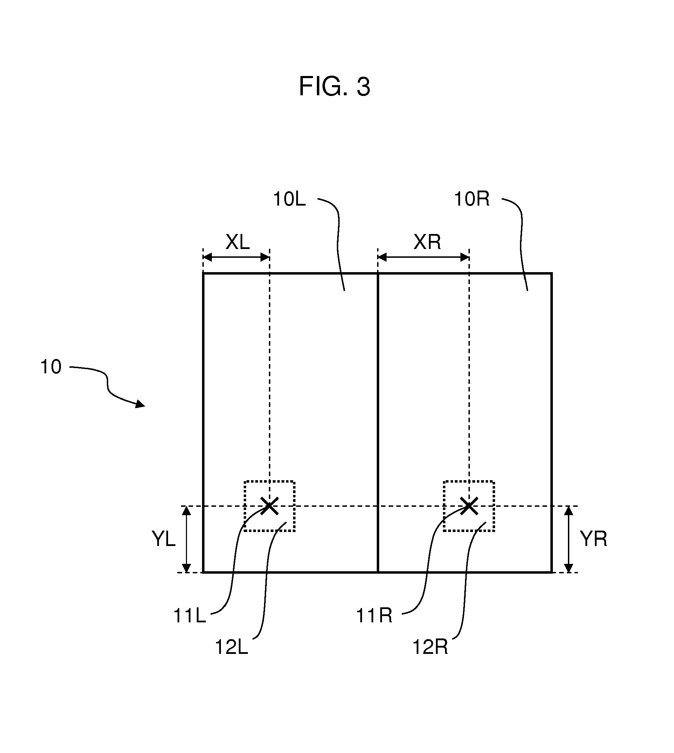

Referring now to FIG. 3, it will be defined hereafter some useful features of a video frame 10 to be analyzed. On each of the two closed regions 10L and 10R of a video frame 10, there may be provided a location 11 L on the left image (respectively 11 R on the right image) at an horizontal coordinate XL (resp. XR) and vertical coordinate YL (resp. YR). The neighbourhood of this location 11 L (resp. 11 R) is referenced 12L (resp. 12R) and includes a region around said location 11 L (resp. 11R).

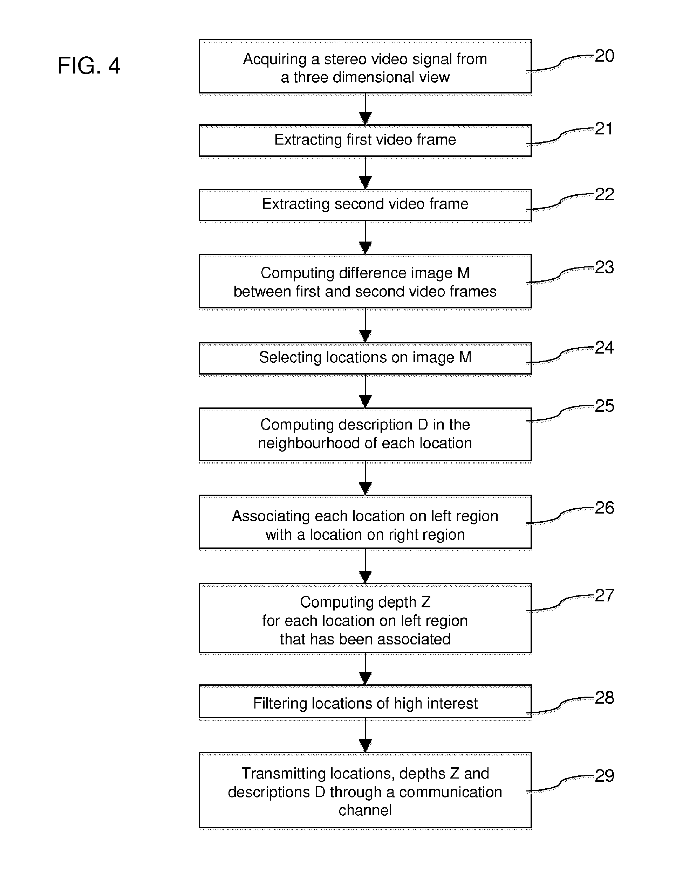

FIG. 4 illustrates a global method of acquiring and analyzing a stereo video signal according to the invention.

Block 20 corresponds to the acquisition of a stereo video signal from a three dimensional view and is based on the stereo video system 1 of FIG. 1. This device 1 allows to select two substantially coincident portions 2L and 2R of the fields of view of two optical assemblies 3L, 4L and 3R, 4R, to project these portions onto respective closed regions 7L and 7R of the image sensor 7, and to sample these closed regions to generate a stereo video signal.

Blocks 21 to 27 correspond to the analysis of the stereo video signal according to the present invention, as carried out by the processor 9. This process involves a first block of codes 21 which directs the processor 9 to extract a first video frame 10 from the stereo video signal.

Optionally, it involves a second block of codes 22 which directs the processor 9 to extract a second video frame 10 from the stereo video signal, so as a difference image M between first and second video frames can be computed at 23. To this end, the stereo video signal contains two video frames that have been recorded in a short period of time, which can easily be made thanks to the video system according to the invention, since it uses a single imager to record two views that are perfectly synchronized from a timing point of view. In each case, starting from a single video frame or from a difference image, the algorithms to be applied are substantially the same: the remaining of the processing carries image M along with the original frame 10. The builder of the system has the liberty to choose for every subsequent processing step whether to apply it to image M or to frame 10. The use of the difference image M allows to select only moving parts of a field of view and to reduce the overall computational cost.

Starting from this difference image M (or from a single video frame), a set of locations 11 L and 11 R (on FIG. 3) is selected respectively on the left and right image 10L and 10R at 24. These locations 11 L and 11 R have coordinates respectively XL, YL and XR, YR. For each location 11 L and 11 R, descriptions D.11L and D.11R are computed in their neighbourhood at 25. Then the matching between the description of each location 11 L of the left image 10L and the description of each location 11 R of the right image 10R is determined at 26, so as to associate a location on the left image with a location on the right image according to their descriptions. For each location 11 L on the left image 10L that has been associated to a location 11R on the right image 10R at 26, the depth Z.11 L is computed at 27, on the basis of the positions XL, YL and XR, YR of respectively said location 11 L and said associated location 11 R. Thus, video frame 10 is associated to depth considerations that allow to determine the three dimension aspect of the field of view.

It will be observed that the extraction of relevant information is performed at steps 24, 25, 26 and 27, which will be therefore described in more details hereafter.

The choice of the set of locations at 24 can be performed with a Harris Corner Detector, which is a well-known technique for the one skilled in the art, for instance in the publication "A combined corner and edge detector" (Harris, C. et al., Fourth Alvey Vision Conference, pp. 147-151, 1988). This technique performs an algorithm which is interested in the gradient of an image and the magnitude of said gradient, and which allows to determine if a given location (or point) is a corner or a part of an edge. Indeed, this technique lands on the value of a response function, which depends on the magnitude of the gradient, and whose maximum indicates the presence of a corner. Then, having sufficiently determined the edges and corners of the objects in the field of view, it is possible to select only several locations in each object, so as to take only salient locations into account during the next steps 25 to 27.

In other embodiments of the invention, some other interest point detection techniques may be performed, like for instance the one described in the publication "SURF: Speeded Up Robust Features" (Herbert Bay et al., Computer Vision and Image Understanding, Vol. 110, Issue 3, June 2008, pp. 346-359).

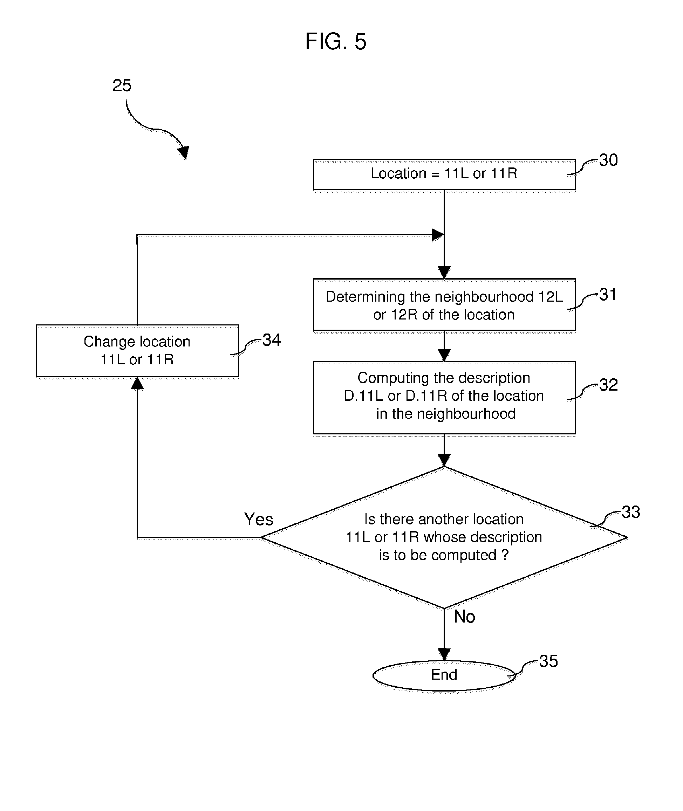

Referring now to FIG. 5, the image 10 is encoded in the neighbourhood of a given location 11 L or 11 R at 25. To this end, block 30 corresponds to the choice of a first location 11L or 11 R among the set of locations that has been selected at 24. For this location 11 L or 11 R, it is first determined the neighbourhood 12L or 12R at 31. Then, the description D.11L or D.11R of this location in its neighbourhood 12L or 12R is computed at 32. If there is still another location 11 L or 11 R whose description is to be computed (block 33), the location is changed at 34 and steps 31 and 32 are repeated, i.e. they are repeated for each location that has been selected at 24. If there is no more location whose description is to be computed (block 33), step 25 is over (block 35).

The description D.11L or D.11R has the form of a vector whose length depends on the algorithm that is chosen. Among the techniques to encode the information contained in a location neighbourhood, one can cite those disclosed in the publications "SURF: Speeded Up Robust Features" (Herbert Bay et al., Computer Vision and Image Understanding, Vol. 110, Issue 3, June 2008, pp. 346-359), "fast Keypoint Recognition using Random Ferns" (M. Ozuysal et al., IEEE Transactions on Pattern Analysis and Machine Intelligence, Vol. 32, Nr. 3, pp. 448-461, March 2010) and "A fast local descriptor for dense matching" (Engin Tola et al., Proceedings of computer vision and pattern recognition (CVPR '08), Jun 2008, USA).

Another method to express the description D.11L or D.11R, which also has the form of a vector, is described in "Robust Real-time Object Detection" (Paul Viola and Michael Jones, International Journal of Computer Vision, 2001), wherein the form of the vector is determined by a learning algorithm, who is also able to act as a pre-filter which filters out, in the end of the disclosed method, parts of the scene that do not contain the object relevant for the end user, thus reducing the amount of resulting data.

The purpose of these descriptors D is two-fold: they allow to match coordinates [XL,YL] of the left image 10L with coordinates [XR,YR] in the right image 10R, as described hereafter in step 26, and they can be used by a user of the system 1 according to the invention to perform a detection and classification task using an appropriate classification.

Step 26 sets the correspondences between the coordinates in the left images and in the right images. In other words, it indicates to the system 1 that a given object at coordinate [XL,YL] in the left image 10L can be found at coordinate [XR,YR] in the right image 10R.

To this end, block 40 corresponds to the choice of a first location 11 L in the left image 10L and block 14 corresponds to the choice of a first location 11 R in the right image 10R. Herein, locations 11 L and 11 R are chosen among the set of locations that has been selected at 24 and whose description has been computed at 25.

For these two locations 11 L and 11 R, at 42, it is first calculated a matching score F as a function of the descriptions of both locations in their respective neighbourhoods 12L and 12R. This function F has the form of a matching score which indicates the degree of similarity of these two locations and in their neighbourhoods. Such a matching score F is well-known from the one skilled in art, for instance from the publication "Fast approximate nearest neighbours with automatic algorithm configuration" (Marius Muja et al., International Conference on Computer Vision Theory and Application (VISAPP '09), 2009).

Then, for locations 11 L and 11 R, the matching score F is compared to a predetermined threshold T at 43. If F is less than T (block 44), it means that the distance (Euclidean distance of Manhattan distance) between the two matching descriptors D.11L and D.11R is small enough and, therefore, locations 11 L and 11 R are associated at 45. If F is superior to T, they are not associated. In this case, if there is another location 11R on the right image to be potentially associated to location 11 L in the left image (block 46), location 11 R is changed and steps 42 to 44 are repeated. If there is no more location 11 R to be associated (block 46), location 11 L is considered as not associated (block 48). After a given location 11 L is determined as associated or not, either through block 45 or 48, if there is another location 11 L in the left image to analyze (block 49), said location 11 L is changed and steps 41 to 44 are repeated. If there is no more location 11 L (block 49), step 26 is over and all the possible associations are made.

In a preferred embodiment, the matching of step 26 is simplified since the vertical position of a given object is the same in both images, i.e. YL is substantially equal to YR, or in practice YL = YR ± 1 pixel, for two matching locations. To this end, as described above, the optics can advantageously be placed in such a way that an object at a given coordinate in the left image appear on the same line in the right image, and vice-versa, i.e. an object substantially shares the same vertical coordinate in the left image and in the right image. Thus, step 26 is simplified, since it is sufficient to calculate matching score F only for two locations who shares the same vertical position, i.e. YL = YR.

From the data extracted from image 10 (or difference image M), only the location and description pairs that are successfully matched between left and right images in step 26 are kept. Left image 10L is chosen as a reference for the global image 10.

Given the knowledge of the optical setup, the knowledge of the coordinate system and the matching location pairs [11 L,11R], it is now possible to compute the depth Z.11 L of the point at location 11 L in the scene, i.e. the distance between said point and video system 1.

To this end, starting from a given association [11L,11R] (block 60), distance Z.11L is computed at 61, using well-known geometry. If there is another association [11L, 11R] whose depth Z is to be computed (block 62), said association is changed at 63 and step 61 is repeated. If there is no more association (block 62), step 27 is ended at 64.

Therefore, thanks to the method of analyzing a stereo video signal according to the invention with steps 21 and 24 to 27 (and optionally 22 and 23), processor 9 provides coordinates [XL,YL] of locations 11 L on the left image, its description D.11L, its distance to camera Z.11 L, and optionally the matching score F(D.11 L,D.11 R). Then, this information may be transmitted as an output to an application electronic device 14, through a communication channel 13, at step 29, in order to exploit descriptions, depths and locations according to the chosen application, for instance to simulate the corresponding field of view.

Finally, to reduce the amount of data transmitted through the channel even more, the distance Z.11L, or the vector D11L can be analyzed and sometimes discarded before transmitting data, at step 28. For example, in an application, one may be interested only to objects close to the camera, thus all the information block (Z.11 L, D11.L, XL,YL) whose Z.11 L is larger than a given value can be discarded. In another example, an analysis of the type disclosed in "Robust Real-time Object Detection" (Paul Viola and Michael Jones, International Journal of Computer Vision, 2001) can be performed on vector D11L to discard the blocks (Z.11 L, D11.L, XL,YL) that do not correspond to the object of interest with enough certainty.

## Claims

1. A method of analyzing a stereo video signal that samples two closed regions (7L, 7R) of an image sensor (7), onto which two substantially coincident portions (2L, 2R) of the fields of a three dimensional view on respectively two optical assemblies (3L, 4L, 3R, 4R) are projected, **characterized in that** said method comprises the steps of:
- extracting from the stereo video signal at least one video frame (10) having two closed regions (10L, 10R) corresponding to the closed regions of the image sensor;
- selecting a set of locations (11 L, 11 R) on each of the two closed regions of the video frame;
- computing a description (D.11L, D.11R) of the video frame in the neighbourhood (12L, 12R) of each location;
- associating at least one location (11 L) on the left region (10L) with one location (11 R) on the right region (10R) according to the matching of their respective descriptions;
- computing the depth (Z.11 L) of at least one location (11 L) on one (11 L) of the regions based on its position (X11L, Y11L) and the position (X11R, Y11R) of its associated location (11R); and
- transmitting said locations (X11L, Y11 L), depths (Z.11 L) and descriptions (D.11L) though a communication channel (13) to an application electronic device (14).

2. Method according to claim 1, wherein the location (X11L, Y11L), the depth (Z.11 L) and the description (D.11L) are filtered (28) according to a predetermined method.

3. Method according to claim 1 or 2, wherein the video frame (10) is obtained by subtracting two successive video frames.

4. Method according to any of claims 1 to 3, wherein the set of locations (11 L, 11R) corresponds to a set of predetermined salient points.

5. Method according to any of the preceding claims, wherein the set of locations (11 L, 11 R) is selected by means of a Harris Corner Detector algorithm.

6. Method according to any one of the preceding claims, wherein the fields of view of the respectively two optical assemblies (3L, 4L, 3R, 4R) substantially share the same vertical position (YL, YR).

7. Method according to any one of the preceding claims, wherein the association of locations (11 L, 11 R) on the left (10L) and right (10R) regions is performed by comparing a matching score (F), that is representative of the matching between the descriptions (D.11L, D.11R) of the video frame in the neighbourhood (12L, 12R) of said locations (11L, 11 R), with a given threshold (T).

8. Method according to claim 7, wherein the matching score (F) corresponds to an estimation of the distance between the descriptions (D.11L, D.11R) of the video frame in the neighbourhood (12L, 12R) of said locations (11L, 11R).

9. A method of acquiring and analyzing a three dimensional view, comprising the steps of:
- selecting two substantially coincident portions (2L,2R) of the fields of view on two optical assemblies (3L,4L,3R,4R);
- projecting the portions onto respective closed regions (7L,7R) of an image sensor (7);
- sampling the closed regions of the image sensor to generate a stereo video signal;
**characterized in that** said method further comprises the steps of analyzing said stereo video signal according to the method of any one of claims 1 to 8.

10. A video system (1) for acquiring and analyzing a three dimensional view, said video system comprising:
- an image sensor (7) responsive to an image projected thereon;
- an optical assembly having first (3L, 4L) and second (3R, 4R) optical channels arranged in such a manner that substantially coincident portions (2L, 2R) on respective fields of view of the first and second optical channels are focused onto closed regions (7L, 7R) of said image sensor;
- a video generation circuit (8) coupled to sample the closed regions of said image sensor to generate a stereo video signal;
**characterized in that** said video system further comprises a processor (9) arranged in such a manner that it computes the method of analyzing a stereo video signal according to any one of claims 1 to 8.
